# EUROPÄISCHE PATENTSCHRIFT

(11) **EP 2 020 102 B1**
(45) Veröffentlichungstag und Bekanntmachung des Hinweises auf die Patenterteilung: **16.03.2016**
(21) Anmeldenummer: 07729119.3
(22) Anmeldetag: 14.05.2007
(51) Int. Cl.: H04B 10/114, G08C 23/04

(54) **VERFAHREN UND ANORDNUNG ZUR ÜBERTRAGUNG VON DATEN MIT WENIGSTENS ZWEI STRAHLUNGSQUELLEN**
METHOD AND ARRANGEMENT FOR TRANSMISSION OF DATA WITH AT LEAST TWO RADIATION SOURCES
PROCÉDÉ ET DISPOSITIF DE TRANSMISSION DE DONNÉES AVEC AU MOINS DEUX SOURCES DE RAYONNEMENT

(30) Priorität: 24.05.2006 DE 102006024421
(43) Veröffentlichungstag der Anmeldung: 04.02.2009
(73) Patentinhaber: OSRAM GmbH, 80807 München (DE)
(72) Erfinder: RANDEL, Sebastian, 81547 München (DE); ROHDE, Harald, 81673 München (DE)
(86) Internationale Anmeldenummer: PCT/EP2007/054667
(87) Internationale Veröffentlichungsnummer: WO 2007/135014

(56) Entgegenhaltungen:
- WO-A-02/47292
- WO-A-88/02203
- WO-A-90/13067
- US-A1- 2002 167 701
- US-A1- 2004 247 323
- US-B1- 7 006 768
- KITAMOTO N ET AL: "Parallel combinatory multiple-subcarrier optical communication systems" PERSONAL, INDOOR AND MOBILE RADIO COMMUNICATIONS, 2002. THE 13TH IEEE INTERNATIONAL SYMPOSIUM ON SEPT. 15-18, 2002, PISCATAWAY, NJ, USA,IEEE, Bd. 3, 15. September 2002 (2002-09-15), Seiten 998-1002, XP010611412 ISBN: 0-7803-7589-0

## Beschreibung

Die Erfindung betrifft ein Verfahren und eine Anordnung zur Übertragung von Daten mit wenigstens zwei Strahlungsquellen.

Eine Strahlungsquelle, deren Intensität schnell, d.h. mit hoher Frequenz, variierbar ist, lässt sich dazu nutzen, Daten zu übertragen. Diese Art, Daten zu übertragen, weist zum Beispiel den Vorteil auf, wenig anfällig gegen elektromagnetische Störungen zu sein. Weiterhin ist es leichter als bei einer Übertragung mit bspw. WLAN möglich, die Signale abzublocken. Dies kann bspw. dazu dienen, die Signale in einem Raum zu halten.

Beispiele für Strahlungsquellen, die schnell modulierbar sind, sind Leuchtdioden (LED, Light Emitting Diode) und Laserdioden.

Es ist bekannt, zur Übertragung der Daten ein On/Off-Keying vorzunehmen, d.h. die Strahlungsquelle zwischen einem Aus- und einem An-Zustand hin- und herzuschalten. Weiterhin ist es bekannt, eine LED mit OFDM (Orthogonal Frequency Division Multiplex) zur Übertragung zu betreiben.

Die der Erfindung zugrunde liegende Aufgabe ist es, ein Verfahren und eine Anordnung zur Übertragung von Daten mit wenigstens zwei Strahlungsquellen anzugeben, mit denen eine erhöhte Übertragungsrate erreicht werden kann.

Diese Aufgabe wird hinsichtlich des Verfahrens durch ein Verfahren gemäß Anspruch 1 und hinsichtlich der Anordnung durch eine Anordnung gemäß Anspruch 11 gelöst. Die Unteransprüche beziehen sich auf vorteilhafte Ausgestaltungen der Erfindung.

Bei dem Verfahren zur Übertragung von Daten mit wenigstens zwei Strahlungsquellen wird durch die Strahlungsquellen Strahlung mit jeweils einer im zeitlichen Mittel im Wesentlichen konstanten festlegbaren Intensität emittiert. Weiterhin werden wenigstens zwei der Intensitäten mit jeweils einer Trägerfrequenz variiert. Wenigstens ein Teil der Daten wird mittels einer Phasenbeziehung der Trägerfrequenzen von wenigstens zwei der Strahlungsquellen untereinander übertragen.

Bei den Strahlungsquellen kann es sich um bspw. Rekombinationsstrahlungsquellen wie LEDs, um Laserdioden, thermische Strahler wie Glühbirnen, oder um Leuchtstoffröhren handeln. Dabei ist es möglich, dass es sich bei allen Strahlungsquellen um die gleiche Sorte von Strahlungsquelle handelt, bspw. eine Gruppe von zehn LEDs, es ist aber auch möglich, dass eine Mischung von verschiedenartigen Strahlungsquellen verwendet wird, bspw. eine Leuchtstoffröhre und zwei LEDs.

Wenigstens zwei der Strahlungsquellen werden so betrieben, dass sie eine im zeitlichen Mittel im Wesentlichen konstante festlegbare Intensität emittieren, wobei die Intensitäten mit jeweils einer Trägerfrequenz variiert werden. Das zeitliche Mittel bezieht sich daher bspw. auf mindestens eine Periodendauer der Trägerfrequenz.

Zur Übertragung wenigstens eines Teils der Daten wird eine Phasenbeziehung der Trägerfrequenzen von wenigstens zwei der Strahlungsquellen untereinander verwendet. Beispielsweise kann für eine Kodierung eines Bits bei einer 0 (Null) die gleiche Phasenlage für zwei Strahlungsquellen verwendet werden, während für eine 1 (Eins) die Phasen der Strahlungsquellen bspw. um 180° gegeneinander verschoben werden. Auch andere Phasenlagen sind möglich. Eine weitere Möglichkeit besteht darin, bspw. die Phasenlagen von mehr als zwei Strahlungsquellen zu verwenden, um jeweils eine Mehrzahl von Bits in einem Takt zu kodieren. Weitere Möglichkeiten ergeben sich durch eine Verwendung eines bekannten Verfahrens zur Frequenz- und/oder Phasenmodulation, bei dem zusätzlich eine Beziehung zwischen den Phasenlagen zweier Strahlungsquellen verwendet wird. Beispiele für bekannte Modulationsverfahren sind unter anderem:
- Phase Shift Keying, PSK;
- Differential Phase Shift Keying, DPSK;
- Frequency Division Mulitplex, FDM;
- Quadratur-Amplitudenmodulation, QAM;
- Minimum Shift Keying, MSK;
- Quadratur-Phasenmodulation, QPSK;

Mit einem Teil der Verfahren lassen sich bereits mehrere Bits in einem Takt übertragen.

Durch das erfindungsgemäße Verfahren ist eine Erhöhung der Datenrate und/oder eine Verbesserung der Übertragungsqualität möglich.

Bevorzugt wird wenigstens eine Strahlungsquelle zur Emission von sichtbarem Licht verwendet. Hierdurch lässt sich bspw. ohne zusätzliche Lichtquelle eine Anzeige realisieren, ob gerade Daten übertragen werden, indem bspw. die Strahlungsquelle immer abgeschaltet wird, wenn gerade keine Daten zu übertragen sind.

Bevorzugt werden die Intensitäten wenigstens eines Teils der Strahlungsquellen so festgelegt, dass die Strahlung zur Beleuchtung geeignet ist. Hierdurch ergibt sich der Vorteil, dass mittels der Strahlungsquellen gleichzeitig eine Datenübertragung und Beleuchtung, bspw. eines Raums, vorgenommen werden kann.

Alternativ oder zusätzlich kann auch eine Strahlungsquelle zur Emission von nicht sichtbarem Licht, insbesondere Infrarot- oder Ultraviolettstrahlung, verwendet werden. Hierdurch ergibt sich der Vorteil, dass es möglich ist, eine Phasenbeziehung zwischen der Strahlungsquelle zur Emission von nicht sichtbarem Licht und wenigstens einer weiteren Strahlungsquelle zur Übertragung wenigstens eines Teils der Daten zu verwenden. Hierdurch wird eine verbesserte Sicherheit erreicht, da bspw. ultraviolette Strahlung eine Glasscheibe nicht durchdringt. Da zum Empfang der Daten auch der Empfang der ultravioletten Strahlung erforderlich ist, können die Daten hinter der Glasscheibe nicht mehr empfangen werden.

Es besteht die Möglichkeit, dass die Intensitäten wenigstens zweier der Strahlungsquellen verschieden sind. Dadurch kann eine festlegbare Beleuchtungsart erzielt werden. Beispielsweise kann bei Verwendung mehrerer LEDs unterschiedlicher Farbe eine festlegbare Gesamtlichtfarbe erreicht werden.

In einer vorteilhaften Ausgestaltung der Erfindung überlappen Spektren der Strahlungsquellen im Wesentlichen nicht. Hierunter wird bspw. verstanden, dass in einem von einer der Strahlungsquellen emittierten Spektralbereich die anderen Strahlungsquellen nur geringe Intensität emittieren, wie es bspw. bei LEDs verschiedener Farben der Fall ist. Zweckmäßig ist es, wenigstens eine Strahlungsquelle zu verwenden, deren Strahlung im Wesentlichen genau eine Wellenlänge enthält, insbesondere eine LED. Hierdurch wird ein Übersprechen der Signale der einzelnen Strahlungsquellen vermieden und somit die Störanfälligkeit der Übertragung verringert. Daraus resultiert eine höhere Übertragungsrate.

In einer vorteilhaften Ausgestaltung der Erfindung ist für wenigstens eine Intensität die Variationsstärke, mit der sie variiert wird, klein im Vergleich zur Intensität, insbesondere geringer als 10% der Intensität, in einer besonderen Ausgestaltung kleiner als 1% der Intensität. Dadurch wird erreicht, dass auch bei einer für das Auge erkennbaren Trägerfrequenz die Intensität weitgehend konstant erscheint. Weiterhin hat es den Vorteil, dass die Intensität hierdurch nahe an einer für die Strahlungsquelle maximal möglichen Intensität gewählt werden kann.

In einer weiteren vorteilhaften Weiterbildung der Erfindung ist wenigstens eine Trägerfrequenz größer als 100Hz, insbesondere gleich 100kHz. Hierdurch wird erreicht, dass für das menschliche Auge die Intensität der entsprechenden Strahlungsquelle konstant erscheint. Weiterhin hat die Verwendung einer hohen Trägerfrequenz den Vorteil, eine hohe Datenrate zu ermöglichen.

In einer weiteren vorteilhaften Weiterbildung der Erfindung sind die Trägerfrequenzen gleich. Hierdurch wird eine Vereinfachung beim Empfang der Daten erzielt, da immer die gleiche Frequenz abgetastet werden kann. Es kann hier also ausgenutzt werden, dass mehrere Trägergleicher Frequenz und gleicher Phasenlage verwendet werden können, um Daten zu übertragen.

Die Anordnung zur Übertragung von Daten weist wenigstens zwei Strahlungsquellen zur Emission von Strahlung mit jeweils einer im zeitlichen Mittel im Wesentlichen konstanten festlegbaren Intensität auf, die derart ausgestaltet sind, dass wenigstens zwei der Intensitäten mit jeweils einer Trägerfrequenz variiert werden und wenigstens ein Teil der Daten mittels einer Phasenbeziehung der Trägerfrequenzen von wenigstens zwei der Strahlungsquellen untereinander übertragen wird. Ein Übertragungsverfahren nach dem Stand der Technik ist aus der US-A-7006768 bekannt.

Weitere Einzelheiten und Vorteile der Erfindung werden anhand von in der Zeichnung dargestellten Ausführungsbeispielen näher erläutert. Dabei zeigen
- Figur 1: einen Raum mit einer Gruppe von drei LEDs als Beleuchtungs- und Datenquelle
- Figur 2: ein schematischer Aufbau einer Empfangseinheit
- Figur 3: schematisch den Phasenverlauf von drei Farbkomponenten

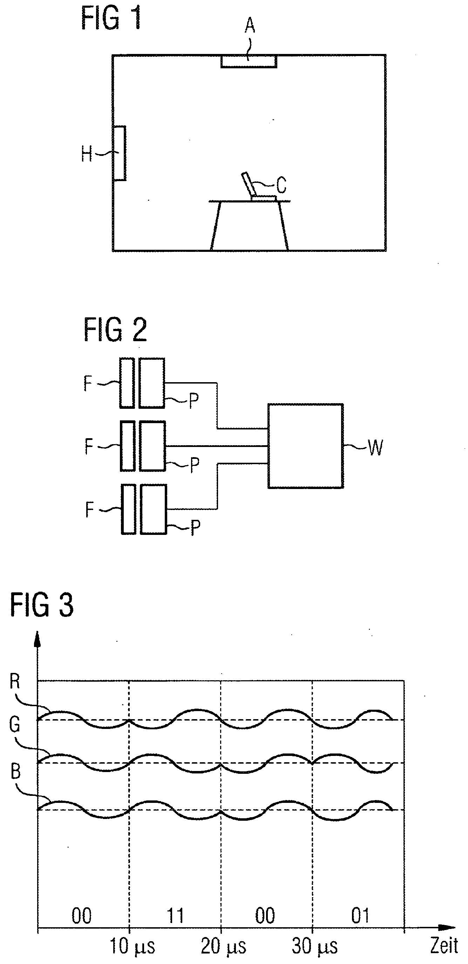

Der in Figur 1 dargestellte beispielhafte Raum wird beleuchtet von einer Lampe A. Die Lampe A enthält 30 LEDs. Hiervon sind 10 LEDs rote LEDs, 10 grüne LEDs und 10 blaue LEDs. Im Raum befindet sich weiterhin ein Tisch, auf dem ein Computer C steht. An einer Wand des Raumes R befindet sich ein Heizungsregler H zur Regelung einer Raumbeheizung.

Sowohl der Computer C als auch der Heizungsregler H weisen eine Empfangseinrichtung auf, mit der sie von der Lampe A übertragene Daten empfangen können. Ein beispielhafter schematisierter Aufbau der Empfangseinheit ist in Figur 2 skizziert. Die Empfangseinheit weist drei Photodioden mit schmalbandigen optischen Filtern F auf. Die Filter F sind so gestaltet, dass die jeweilige Photodiode P nur das Signal jeweils einer Gruppe von LEDs der Lampe A empfängt. Eine der Photodioden P empfängt daher den roten, eine den grünen und eine den blauen Lichtanteil. Die Ausgänge der Photodioden P sind verbunden mit einer elektronischen Auswerteschaltung W, die für eine Taktrückgewinnung sorgt und per Phasenvergleicher die Daten aus der Phasenlage der LED-Signale zueinander ermittelt.

In einem ersten Ausführungsbeispiel soll die Kodierung von Bits der zu übertragenden Daten senderseitig auf die folgende Weise erfolgen: Weisen alle drei Farbkomponenten, d.h. das rote, grüne und blaue Licht die gleiche Phasenlage auf, so entspricht dies der Bitfolge "00", d.h. zwei aufeinander folgende Nullen. Sind die rote und blaue Farbkomponente gleichphasig und die grüne Farbkomponente gegenphasig, d.h. weist die grüne Farbkomponente eine um 180° versetzte Phasenlage auf, so entspricht dies der Bitfolge "01". Sind die rote und grüne Farbkomponente gleich- und die blaue Farbkomponente gegenphasig, entspricht dies der Bitfolge "10". Sind die blaue und grüne Farbkomponente gleich- und die rote Farbkomponente gegenphasig, entspricht dies der Bitfolge "11".

In einem zweiten Ausführungsbeispiel können zusätzlich mehrere Phasenlagen bei einer Farbkomponente verwendet werden. So können bspw. die Trägerfrequenzen der Farbkomponenten jeweils zwei um 45° in der Phasenlage versetzte Anteile aufweisen. Diese versetzten Anteile sind jeweils unabhängig voneinander verwendbar. Dadurch kann das für das erste Ausführungsbeispiel verwendete Kodiervorgehen in der gleichen Zeit doppelt verwendet werden. Hierdurch ist es möglich, die doppelte Übertragungsrate zu erzielen.

Figur 3 zeigt einen beispielhaften Verlauf der Intensitäten R, G, B der Farbkomponenten der Lampe A, d.h. ihrer LEDs. Hierbei wird davon ausgegangen, dass alle jeweils 10 LEDs den entsprechenden Intensitätsverlauf aufweisen, da hierdurch die Signalstärke am größten ist. Es ist aber auch möglich, dass lediglich ein Teil der LEDs so betrieben wird, während der restliche Teil der LEDs eine konstante Intensität aufweist. Letzteres kann bspw. dann hilfreich sein, wenn die LEDs einer Farbkomponente über eine große Strecke verteilt sind, was durch Laufstreckenunterschiede zu einer Verwischung der Phasenlage und dadurch zu einer größeren Störanfälligkeit führen würde.

Figur zeigt einen grünen Intensitätsverlauf G, einen roten Intensitätsverlauf R und einen blauen Intensitätsverlauf B. Die hier verwendete Trägerfrequenz entspricht 100kHz, entsprechend einer Periodendauer von 10µs gemäß Figur 3. Bei der Lichtamplitude kann es sich zum einen um ein Maß für die Lichtstärke handeln, oder aber auch um eine Ansteuerspannung für die LEDs L der Lampe A.

Die im Durchschnitt konstanten Intensitäten der LEDs gemäß Figur 3 würden bei der Lampe A zu einem orangen Lichtton führen. Aufgrund der sehr hohen Trägerfrequenz sind die Schwankungen der Intensitäten R, G, B für das menschliche Auge nicht sichtbar und die LEDs L und somit die Lampe A geben eine scheinbar konstante Helligkeit ab. Neben der hier verwendeten Trägerfrequenz von 100 kHz sind auch andere Trägerfrequenzen wählbar, beispielsweise 20 MHz oder 10 KHz.

Die drei für die Farbkomponenten dargestellten Trägerfrequenzen weisen Phasensprünge auf. Die Phasenlage der Farbkomponenten zueinander dient der Kodierung von Bits wie im ersten Ausführungsbeispiel beschrieben. Innerhalb der ersten 10µs sind alle drei Farbkomponenten phasengleich. Während der zweiten 10µs ist die rote Farbkomponente gegenphasig, während der dritten 10µs sind wieder alle drei Farbkomponenten phasengleich und während der vierten 10µs ist die grüne Farbkomponente gegenphasig.

Die mittels der Phasenlagen übertragenen Bits sind im unteren Teil von Figur 3 als Zahlen angegeben. So wird mit dem in Figur 3 gegebenen beispielhaften Intensitätsverlauf die BitFolge "00110001" übertragen.

Die auf diese Weise durch die Lampe A und somit die LEDs L übertragenen Daten können beispielsweise vom Computer C empfangen werden. Dabei kann es sich beispielsweise um vom Computer C angeforderte Daten aus dem Internet handeln. Weiterhin kann auch der Heizungsregler H Daten von der Lampe A empfangen. Für den Heizungsregler H sind beispielsweise Daten interessant, die der Steuerung der Heizungen im Raum R dienen. Diese können beispielsweise von außen über Mobiltelefon oder von einem zentralen Steuersystem an den Heizungsregler H übermittelt werden.

Es ist möglich, dass die mechanische Trennung der Lichtquellen voneinander, d.h. bspw. die Verwendung zweier nebeneinander angeordneter LEDs, zu einer Einflussnahme von Laufstreckenunterschieden zum Empfänger führt. Wird bspw. eine Trägerfrequenz von 1MHz verwendet, entspricht dies einer Wellenlänge von etwa 300m. Sind zwei Lichtquellen weit voneinander entfernt angebracht, bspw. in 100m Abstand voneinander in einer Sporthalle, so kann sich eine deutliche und unvorhersehbare Phasenverschiebung ergeben.

Eine senderseitige Phasenverschiebung um 180° zwischen Farbkomponenten kann daher zu einer festen, aber unvorhersehbaren Phasenverschiebung beim Empfänger führen, unter Umständen sogar zur Phasengleichlage. Daher ist es zweckmäßig, beim Empfänger erst eine Synchronisierung vorzunehmen, bei der mit einer geeigneten vom Sender vorangestellten Präambel dem Empfänger ermöglicht wird, die durch die Geometrie erwirkte Phasenschiebung zwischen den Farbkomponenten zu bestimmen. Danach kann mit dem eigentlichen Empfang der Daten begonnen werden.

Eine Alternative zur Synchronisierung besteht darin, dass anstelle der absoluten Phasenlage der Farbkomponenten zueinander eine Veränderung der Phasenlagen zur Kodierung von Bits verwendet wird. Hierdurch wird die absolute Phasenlage der Farbkomponenten beim Empfänger unerheblich. Veränderungen der Phasenlage jedoch kommen unverändert beim Empfänger an.

Wird die Lampe A ausgeschaltet, ist ohne weiteres keine Übertragung von Daten mehr möglich. Um trotzdem eine Übertragung zu ermöglichen, kann bspw. anstatt einer völligen Abschaltung der Lampe A ihre Intensität lediglich so weit heruntergesetzt werden, dass sie bspw. bei Tageslicht kein für ein menschliches Auge mehr wahrnehmbares Licht abgibt. Sie erscheint somit ausgeschaltet, während eine Datenübertragung weiterhin möglich ist. Eine reduzierte Intensität führt dabei zu einem geringeren Signal-Rausch-Verhältnis. Das wiederum führt bspw. zu einer geringeren Datenübertragungsrate.

Ein drittes Ausführungsbeispiel für das erfindungsgemäße Verfahren ergibt sich dadurch, dass zusätzlich zu den drei in den bisherigen Ausführungsbeispielen verwendeten Farbkomponenten der Lampe A eine weitere, ultraviolette LED verwendet wird. Die Strahlung der ultravioletten LED kann neben den Wänden des Raums auch die Fenster des Raums nicht durchdringen und ist somit außerhalb des Raums nicht empfangbar, sofern keine Türen oder sonstigen Öffnungen bestehen.

Im dritten Ausführungsbeispiel werden die relativen Phasenlagen der nun vier Farbkomponenten dazu verwendet, in einem Schritt eine Bitfolge aus drei Bits zu kodieren. Da die ultraviolette Farbkomponente außerhalb des Raumes nicht empfangbar ist, kann eine Dekodierung der Übertragung außerhalb des Raums nicht stattfinden, auch wenn die Signale der anderen drei Farbkomponenten empfangen werden können. Hierdurch wird eine gesteigerte Abhör-Sicherheit erreicht, während gleichzeitig eine Beleuchtung des Raums mit der Lampe A und eine Datenübertragung ermöglicht wird.

## Patentansprüche

1. Verfahren zur Übertragung von Daten mit wenigstens zwei Strahlungsquellen, bei dem
- durch die Strahlungsquellen Strahlung mit jeweils einer im zeitlichen Mittel im Wesentlichen konstanten festlegbaren Intensität emittiert wird;
- wenigstens zwei der Intensitäten mit jeweils einer Trägerfrequenz variiert werden;
**dadurch gekennzeichnet, daß**
- wenigstens ein Teil der Daten mittels einer Phasenbeziehung der Trägerfrequenzen von wenigstens zwei der Strahlungsquellen untereinander übertragen wird.

2. Verfahren nach einem der vorangehenden Ansprüche, bei dem wenigstens eine Strahlungsquelle zur Emission von sichtbarem Licht verwendet wird.

3. Verfahren nach Anspruch 1 oder 2, bei dem wenigstens eine Strahlungsquelle zur Emission von nicht sichtbarem Licht, insbesondere Infrarot- oder Ultraviolettstrahlung, verwendet wird.

4. Verfahren nach einem der vorangehenden Ansprüche, wobei die Intensitäten wenigstens eines Teils der Strahlungsquellen so festgelegt werden, dass die Strahlung zur Beleuchtung geeignet ist.

5. Verfahren nach einem der vorangehenden Ansprüche, wobei die Intensitäten wenigstens zweier der Strahlungsquellen verschieden sind.

6. Verfahren nach einem der vorangehenden Ansprüche, bei dem Spektren der Strahlungsquellen im Wesentlichen nicht überlappen.

7. Verfahren nach einem der vorangehenden Ansprüche, bei dem wenigstens eine Strahlungsquelle verwendet wird, deren Strahlung im Wesentlichen genau eine Wellenlänge enthält, insbesondere eine LED.

8. Verfahren nach einem der vorangehenden Ansprüche, wobei für wenigstens eine Intensität die Variationsstärke, mit der sie variiert wird, geringer als 10% der Intensität ist.

9. Verfahren nach einem der vorangehenden Ansprüche, wobei wenigstens eine Trägerfrequenz größer als 100Hz, insbesondere gleich 100kHz, ist.

10. Verfahren nach einem der vorangehenden Ansprüche, bei dem die Trägerfrequenzen gleich sind.

11. Anordnung zur Übertragung von Daten mit wenigstens zwei Strahlungsquellen zur Emission von Strahlung mit jeweils einer im zeitlichen Mittel im Wesentlichen konstanten festlegbaren Intensität, die derart ausgestaltet sind, dass wenigstens zwei der Intensitäten mit jeweils einer Trägerfrequenz variiert werden und **dadurch gekennzeichnet, daß** wenigstens ein Teil der Daten mittels einer Phasenbeziehung der Trägerfrequenzen von wenigstens zwei der Strahlungsquellen untereinander übertragen wird.

## Claims

1. Method for transmission of data with at least two radiation sources, wherein
- the radiation sources emit radiation with in each case a definable intensity that is substantially constant on average over time;
- at least two of the intensities are varied with a respective carrier frequency;
**characterized in that**
- at least one portion of the data is transmitted by means of a phase relationship of the carrier frequencies of at least two of the radiation sources among one another.

2. Method according to any of the preceding claims, wherein at least one radiation source is used for emission of visible light.

3. Method according to Claim 1 or 2, wherein at least one radiation source is used for emission of non-visible light, in particular infrared or ultraviolet radiation.

4. Method according to any of the preceding claims, wherein the intensities of at least one portion of the radiation sources are defined in such a way that the radiation is suitable for illumination.

5. Method according to any of the preceding claims, wherein the intensities of at least two of the radiation sources are different.

6. Method according to any of the preceding claims, wherein the spectra of the radiation sources substantially do not overlap.

7. Method according to any of the preceding claims, wherein at least one radiation source is used, whose
radiation substantially contains precisely one wavelength, in particular an LED.

8. Method according to any of the preceding claims, wherein for at least one intensity, the variation extent to which it is varied is less than 10% of the intensity.

9. Method according to any of the preceding claims, wherein at least one carrier frequency is greater than 100 Hz, in particular equal to 100 kHz.

10. Method according to any of the preceding claims, wherein the carrier frequencies are identical.

11. Arrangement for transmission of data with at least two radiation sources for emission of radiation with in each case a definable intensity that is substantially constant on average over time, which are configured in such a way that at least two of the intensities are varied with a respective carrier frequency and
**characterized in that**
at least one portion of the data is transmitted by means of a phase relationship of the carrier frequencies of at least two of the radiation sources among one another.

## Revendications

1. Procédé pour la transmission de données avec au moins deux sources de rayonnement, dans lequel
- grâce aux sources de rayonnement est émis un rayonnement avec respectivement une intensité qui peut être maintenue essentiellement constante en moyenne temporelle ;
- au moins deux des intensités sont modifiées avec chacune une fréquence porteuse ;
**caractérisé en ce que**
- au moins une partie des données sont mutuellement transmises au moyen d'une relation de phase des fréquences porteuses d'au moins deux des sources de rayonnement.

2. Procédé selon l'une des revendications précédentes, dans lequel au moins une source de rayonnement est utilisée pour l'émission d'une lumière visible.

3. Procédé selon la revendication 1 ou 2, dans lequel au moins une source de rayonnement est utilisée pour l'émission d'une lumière invisible, en particulier un rayonnement infrarouge ou ultraviolet.

4. Procédé selon l'une des revendications précédentes, dans lequel les intensités d'au moins une partie des sources de rayonnement sont déterminées de façon que le rayonnement soit adapté à l'éclairage.

5. Procédé selon l'une des revendications précédentes, dans lequel les intensités d'au moins deux des sources de rayonnement sont différentes.

6. Procédé selon l'une des revendications précédentes, dans lequel les spectres des sources de rayonnement ne se chevauchent pas sensiblement.

7. Procédé selon l'une des revendications précédentes, dans lequel est utilisée au moins une source de rayonnement dont le rayonnement contient pour l'essentiel exactement une longueur d'onde, en particulier une LED.

8. Procédé selon l'une des revendications précédentes, dans lequel, pour au moins une intensité, l'amplitude de variation avec laquelle elle est modifiée est inférieure à 10 % de l'intensité.

9. Procédé selon l'une des revendications précédentes, dans lequel au moins une fréquence porteuse est supérieure à 100 Hz, en particulier est égale à 100 kHz.

10. Procédé selon l'une des revendications précédentes, dans lequel les fréquences porteuses sont identiques.

11. Agencement pour la transmission de données avec au moins deux sources de rayonnement pour l'émission d'un rayonnement avec respectivement une intensité qui peut être maintenue essentiellement constante en moyenne temporelle, lesquelles sont conçues de telle façon qu'au moins deux des intensités se modifient avec chacune une fréquence porteuse et **caractérisé en ce qu'**au moins une partie des données sont mutuellement transmises au moyen d'une relation de phase des fréquences porteuses d'au moins deux des sources de rayonnement.
